# DEMANDE DE BREVET EUROPEEN

(11) **EP 4 813 524 A1**
(43) Date de publication de la demande: **30.09.2026**
(21) Numéro de dépôt: 26167267.9
(22) Date de dépôt: 24.03.2026
(51) Int. Cl.: B05B 13/04, B05B 13/00, B25J 9/16, B41J 2/21, B41J 3/407, G06K 15/02, G06K 15/10

(54) **PROCÉDÉ ET INSTALLATION D'APPLICATION DE PRODUIT DE REVÊTEMENT LIQUIDE AU MOYEN D'UNE TÊTE D'IMPRESSION**

(30) Priorité: 25.03.2025 FR 2503047
(71) Demandeur: Exel Industries, 51200 Epernay (FR)
(72) Inventeur: CHOUAN, Nicolas, 51200 Epernay (FR); CHEVRON, Didier, 51200 Epernay (FR)
(74) Mandataire: Lavoix

(57) **Abrégé**

La présente invention concerne un procédé de d'application de produit de revêtement liquide sur une surface (S) à revêtir, dans lequel une tête d'impression (10) équipée d'au moins une rangée de buses d'impression (14i) est déplacée en regard de la surface à revêtir selon une trajectoire (T) comprenant au moins une passe (Pj) qui s'étend suivant un axe de passe (Xj), caractérisé en ce qu'il comprend au moins une étape consistant à compenser un phénomène de migration par capillarité du produit de revêtement, entre une goutte (Gi) de produit de revêtement en train d'être déposée et une goutte ou une bande (BP) de produit de revêtement déjà déposée, par décalage (Δ1, Δ2, Δ3) d'au moins une passe en cours de la trajectoire, perpendiculairement à son axe de passe (Xj).

## Description

La présente invention concerne un procédé d'application de produit de revêtement liquide sur une surface à revêtir, dans lequel une tête d'impression équipée d'au moins une rangée de buses d'impression est déplacée en regard de la surface à revêtir en suivant une trajectoire.

Les produits de revêtement présentent une certaine capillarité qui leur est propre, de sorte qu'une goutte de produit de revêtement en cours de dépôt sur une surface a tendance à migrer vers une quantité de produit de revêtement qui vient d'être déposée et, donc qui est encore humide et qui est située au voisinage immédiat de la goutte en cours de dépôt. Ce phénomène de migration par capillarité tend à rendre imprécis le positionnement d'une bande de produit de revêtement réalisé au moyen d'une rangée de buses appartenant à une tête d'impression, ce qui risque d'induire un défaut de centrage d'une telle bande, par rapport à un axe théorique d'application du produit de revêtement, ou de créer des surépaisseurs ou des zones non revêtues à l'interface entre deux bandes adjacentes ou au bord de la surface à revêtir.

Comme cela ressort de FR3111586A1, il arrive que chaque rangée de buses d'une tête d'impression doive être orientée selon une direction non perpendiculaire à une direction de déplacement de la buse, ceci afin de conserver un écart donné entre des lignes de gouttes de produit de revêtement déposé, en vue de garantir un dépôt homogène de produit de revêtement sur toute une zone. Dans ce cas, lors d'un déplacement en translation de la tête d'impression, toutes les buses n'appliquent pas le produit de revêtement en même temps sur la surface à revêtir mais s'activent plutôt avec une configuration en cascade, où une goutte déposée par une buse donnée est attirée par une ligne de gouttes déjà déposées par une buse adjacente qui est en avance selon la direction de déplacement de la tête d'impression. Là encore, un phénomène de migration par capillarité, entre une goutte en cours de dépôt et des gouttes déjà déposées, peut perturber l'application de produit de revêtement.

Dans un autre cas, si une trajectoire de déplacement d'une tête d'impression comprend plusieurs passes successives et parallèles, une rangée de buses peut être amenée à appliquer un produit de revêtement sur une zone d'une surface à revêtir qui affleure une zone de cette surface sur laquelle est déjà appliquée une bande de produit de revêtement, qui reste humide. Une migration par capillarité a lieu entre le produit de revêtement en cours d'application et la bande de produit de revêtement humide déjà appliquée, tout particulièrement au niveau de la ligne de gouttes de produit de revêtement appliquée par une première buse immédiatement voisine de la bande de produit de revêtement déjà appliqué et humide. Dans le cas contraire, si c'est la dernière buse d'une rangée de buses qui est voisine d'une bande de produit de revêtement déjà appliqué et humide, un phénomène de migration en sens inverse se produit.

D'autres procédés d'application de produit de revêtement sont connus de EP3643409A1, US2014/0063096A1 et DE102013002413A1.

Dans tous les cas, la migration par capillarité, entre une goutte de produit de revêtement en cours d'application et une quantité de produit de revêtement déjà déposée et encore humide, est de nature à perturber la répartition du produit de revêtement sur la surface à revêtir, donc la précision de l'application.

C'est à ces inconvénients qu'entend plus particulièrement remédier l'invention en proposant un nouveau procédé d'application de produit de revêtement qui n'est pas perturbé par un phénomène de migration par capillarité du produit de revêtement.

A cet effet, l'invention concerne un procédé d'application de produit de revêtement liquide sur une surface à revêtir, dans lequel une tête d'impression équipée d'au moins une rangée de buses d'impression est déplacée en regard de la surface à revêtir selon une trajectoire comprenant au moins une passe qui s'étend suivant un axe de passe, caractérisé en ce qu'il comprend au moins une étape consistant à compenser un phénomène de migration par capillarité du produit de revêtement, entre une goutte de produit de revêtement en train d'être déposée et une goutte ou une bande de produit de revêtement déjà déposée, par décalage d'au moins une passe en cours de la trajectoire, perpendiculairement à son axe de passe.

Grâce à l'invention, la compensation du phénomène de migration par capillarité du produit de revêtement permet d'assurer un positionnement précis d'une bande de produit de revêtement appliqué au moyen d'une rangée de buses, ainsi que des différentes lignes de produit de revêtement au sein d'une telle bande de produit de revêtement, sans qu'une migration par capillarité du produit de revêtement en cours de dépôt vers une zone déjà revêtue de produit de revêtement ne vienne perturber cette application. Les risques qu'une bande de produit de revêtement ne soit pas correctement positionnée selon une direction transversale, ou que des surépaisseurs ou des zones non-revêtues soient créées est fortement diminué, voire exclus.

Dans la suite de la présente description « migration » utilisé seul désigne une migration par capillarité des gouttes de produit de revêtement en cours de dépôt.

Selon des aspects avantageux mais non obligatoires de l'invention, un tel procédé peut incorporer une ou plusieurs des caractéristiques suivantes, prises dans toute combinaison techniquement admissible :
- Un calculateur détermine, à partir d'une trajectoire théorique de la tête d'impression, une trajectoire corrigée dans laquelle au moins une passe est décalée par rapport à sa position selon la trajectoire théorique, d'un décalage perpendiculaire à son axe de passe.
- Le sens et/ou l'amplitude du décalage de la passe en cours de la trajectoire est ou sont déterminé(s) en tenant compte de la présence d'une éventuelle zone de la surface déjà revêtue, adjacente à la passe en cours, et de la position de cette zone de la surface déjà revêtue par rapport à la passe en cours.
- Le sens et/ou l'amplitude du décalage de la passe en cours de la trajectoire est ou sont déterminé(s) en tenant compte d'un éventuel angle d'inclinaison de la rangée de buses par rapport à l'axe de la passe.
- Le sens et/ou l'amplitude du décalage de la passe en cours de la trajectoire est ou sont déterminé(s) en tenant compte d'un angle de contact entre le produit de revêtement et le matériau de la surface à revêtir.
- Pour un produit de revêtement et un matériau de la surface à revêtir donnés, l'amplitude du décalage de la passe en cours de la trajectoire est sélectionnée parmi une première valeur absolue du décalage correspondant au cas où la passe a lieu sans qu'une zone de la surface déjà revêtue soit adjacente à la passe de la trajectoire ; une deuxième valeur absolue du décalage correspondant au cas où la passe a lieu alors qu'une zone de la surface déjà revêtue par une bande de produit de revêtement est adjacente à la passe de la trajectoire, sur un premier côté de la passe voisin d'une buse de la rangée de buses ; et une troisième valeur absolue du décalage correspondant au cas où la passe a lieu alors qu'une zone de la surface déjà revêtue par une bande de produit de revêtement est adjacente à la passe de la trajectoire, sur un deuxième côté de la passe, opposé au premier côté.
- Le sens et/ou l'amplitude du décalage de la passe en cours de la trajectoire est ou sont déterminé(s) à partir d'au moins un abaque contenant des valeurs prédéterminées de sens et d'amplitude de migration, en fonction d'au moins le produit de revêtement et le matériau constitutif de la surface à revêtir.
- L'amplitude du décalage de la passe en cours de la trajectoire est comprise entre 25% et 50% du diamètre d'une goutte de produit de revêtement en cours de dépôt par une des buses de la rangée de buses.
- La trajectoire comprend plusieurs passes successives, notamment des passes adjacentes, et le sens et/ou l'amplitude du décalage de chaque passe en cours de la trajectoire est ou sont déterminé(s) en tenant compte du sens et/ou de l'amplitude du décalage de la passe précédente.

Selon un deuxième aspect, l'invention concerne une installation d'application de produit de revêtement liquide sur une surface à revêtir d'un objet, l'installation incluant une tête d'impression équipée d'au moins une rangée de buses d'impression, cette installation comprenant un calculateur configuré pour mettre en œuvre un procédé tel que décrit ci-dessus.

L'invention sera mieux comprise et d'autres avantages de celle-ci apparaîtront plus clairement à la lumière de la description qui va suivre d'un mode de réalisation d'un procédé et d'une installation conformes à l'invention, donnée uniquement à titre d'exemple et faite en référence aux dessins annexés dans lesquels :
[Fig. 1] la figure 1 est une représentation schématique de principe d'une installation de revêtement de carrosserie de véhicule automobile conforme à l'invention, dans laquelle est mis en œuvre un procédé également conforme à l'invention ;
[Fig. 2] la figure 2 est une vue de dessus du toit du véhicule représenté à la figure 1 et montre une trajectoire d'une tête d'impression appartenant à l'installation de la figure 1 ;
[Fig. 3] la figure 3 représente sur deux inserts A) et B), l'application d'un produit de revêtement sur une surface à revêtir telle que celle représentée à la figure 2, selon l'art antérieur, dans deux configurations ;
[Fig. 4] la figure 4 représente sur deux inserts A) et B), l'application d'un produit de revêtement sur une surface à revêtir telle que celle représentée à la figure 2, selon l'art antérieur, dans deux autres configurations ;
[Fig. 5] la figure 5 représente sur deux inserts A) et B), l'application d'un produit de revêtement, dans deux configurations correspondant respectivement aux inserts A) et B) de la figure 3, avec mise en œuvre du procédé de l'invention ; et
[Fig. 6] la figure 6 représente, sur deux inserts A) et B), l'application de produit de revêtement, dans deux configurations correspondant respectivement aux inserts A) et B) de la figure 4, avec mise en œuvre du procédé de l'invention.

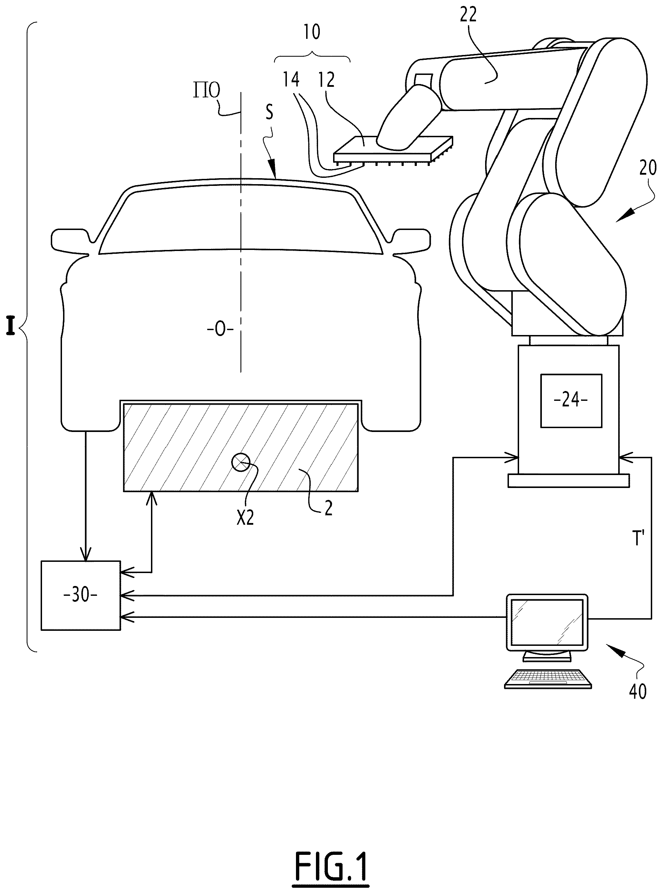

L'installation I représentée sur la figure 1 est prévue pour l'application de peinture sur des objets O qui, dans l'exemple de cette figure, sont des carrosseries de véhicules automobiles.

Plus précisément, dans cet exemple, l'installation I sert à revêtir la surface externe S du toit d'une telle carrosserie, de part et d'autre d'un plan médian π0 parallèle à la plus grande dimension de la carrosserie.

En variante, les objets à revêtir peuvent être d'autres parties d'une carrosserie de véhicule automobile, par exemple des parechocs, des portes ou, plus généralement, tout objet pouvant être revêtu, par exemple une partie de carlingue d'aéronef ou une caisse d'appareil électroménager, ces exemples n'étant pas limitatifs.

L'installation I comprend un convoyeur 2 prévu pour déplacer les objets O le long d'un axe de convoyage X2, perpendiculaire au plan de la figure 1. Ce convoyeur est, de préférence, de type « stop-and-go », c'est-à-dire qu'il maintient les objets immobiles en cours d'application du produit de revêtement. L'installation I comprend également une tête d'impression 10 montée à l'extrémité du bras 22 d'un robot multiaxes 20 disposé au voisinage du convoyeur 2.

En variante, le robot 20 peut être un robot réciprocateur ou tout autre robot capable de déplacer la tête d'impression 10 par rapport aux objets O à revêtir.

Le robot comprend un contrôleur 24, parfois dénommé « baie robot », qui pilote les déplacements du bras 22 en fonction d'une trajectoire théorique T, de la tête d'impression 10 en regard de la surface S à revêtir, qui est prédéterminée.

A la figure 1, le contrôleur est représenté dans le robot 20. Il peut toutefois être disposé à l'extérieur du robot.

La tête d'impression 10 comprend un corps rigide 12, en particulier monobloc, et un certain nombre de buses d'impression 14, dénommées « buses » dans la suite de cette description.

L'installation I comprend également une unité électronique de commande 30 ou ECU (de l'Anglais « electronic control unit ») qui est en communication bidirectionnelle au moins avec le convoyeur 2 et le contrôleur 24 du robot 20 et qui pilote la tête d'impression 10. La communication entre l'ECU 30 et le contrôleur 24 permet de synchroniser l'activation de la tête d'impression et la position du bras 22 du robot. A la figure 1, l'ECU 30 est représentée indépendante des appareils 2 et 20. En variante, l'ECU 30 peut être intégré au robot 20.

Une stratégie de calcul est mise en place pour générer une trajectoire corrigée T', de la tête d'impression 10 en regard de la surface S à revêtir, à partir de la trajectoire théorique T, selon les explications qui suivent.

Cette stratégie de calcul est mise en œuvre dans un calculateur 40, qui est représenté à la figure 1 sous la forme d'un ordinateur et qui communique avec l'ECU 30 et avec le contrôleur 24. A cet effet, le calculateur 40 comprend au moins un microprocesseur et une mémoire de stockage d'un programme informatique et de données nécessaires à la mise en œuvre de ce programme, ce microprocesseur et cette mémoire n'étant pas représentés. Ce calculateur 40 travaille hors ligne, de façon décalée dans le temps par rapport à l'application du produit de revêtement. En particulier, une partie au moins des calculs effectués par le calculateur 40 ont lieu avant l'application du produit de revêtement.

La structure du calculateur n'est pas limitée à un ordinateur. Il peut prendre d'autres formes, notamment celle d'une carte électronique. A la figure 1, le calculateur 40 est représenté indépendant des appareils 2 et 20 et de l'ECU 30. En variante, le calculateur 40 peut être intégré au robot 20, notamment au contrôleur 24, ou à l'ECU 30.

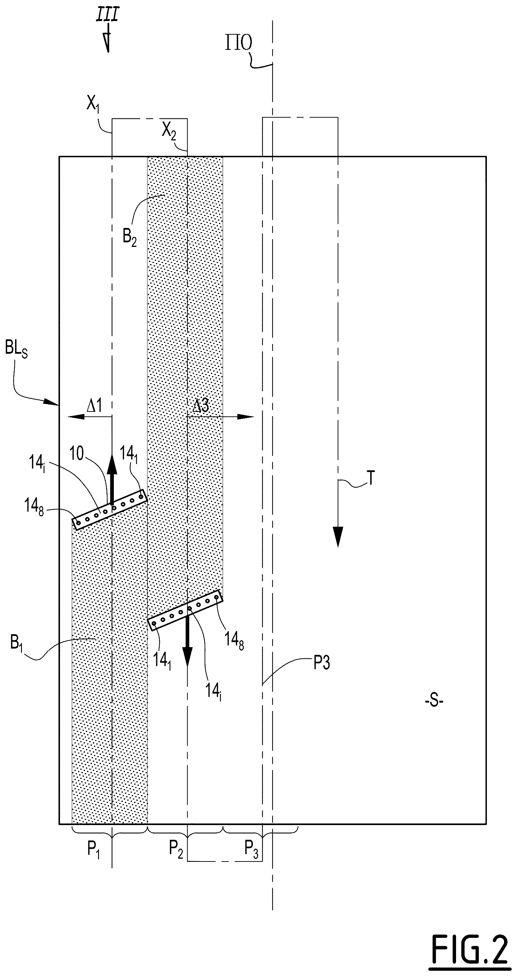

Comme visible à la figure 2, la trajectoire prédéterminée théorique T de la tête d'impression 10 en regard de la surface à revêtir S comprend plusieurs passes P₁, P₂, P₃, etc. Chaque passe Pⱼ, s'étend sur un axe Xⱼ, avec j un entier naturel compris entre 1 et le nombre de passes de la trajectoire T.

Dans l'exemple des figures, chaque axe Xⱼ est rectiligne et parallèle au plan π0.

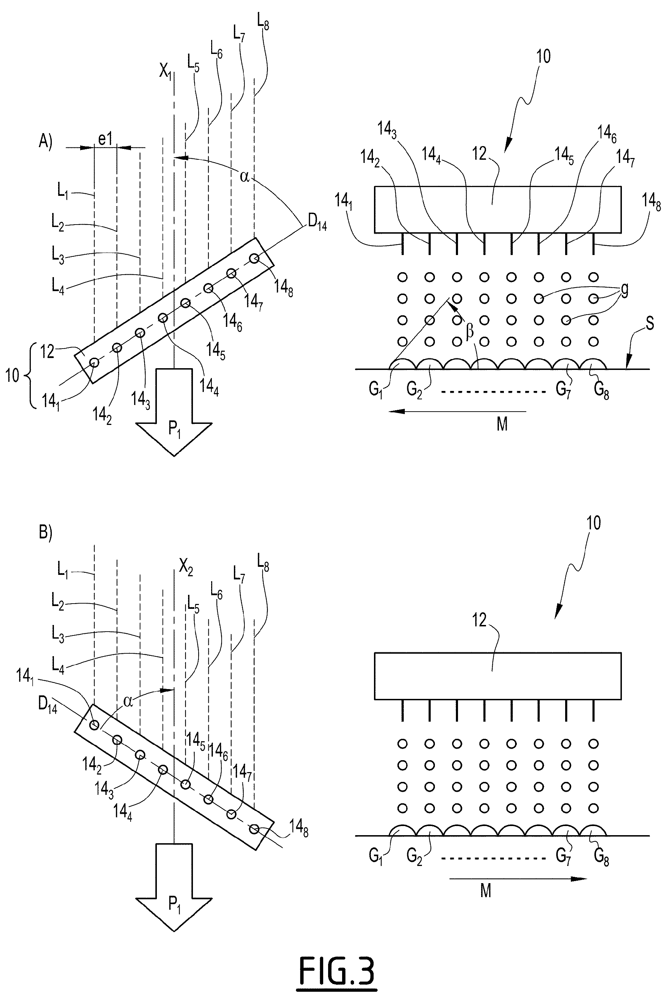

Les figure 3 à 6 montrent la tête d'impression 10 en vue de dessus et en vue de face lorsqu'elle est considérée dans le sens de la flèche III à la figure 2. Sur la figure 2 et sur les parties gauches des figures 3 à 6, le corps 12 est représenté en vue de dessus et transparent, ce qui permet de visualiser les buses 14, qui sont au nombre de huit et référencées 14ᵢ, avec i un entier naturel entre 1 et 8. La buse 14₁ est la plus proche de l'extrémité gauche du corps 12 et la buse 14₈ est la plus proche de l'extrémité droite, dans la partie gauche des figures 3 à 6.

Au cours du déplacement de la tête d'impression 10 selon une passe Pᵢ, chaque buse 14ᵢ dépose une ligne Lᵢ de gouttes de peinture, avec i un entier naturel entre 1 et 8. Les lignes Lᵢ sont parallèles entre elles et à la direction de déplacement de la tête d'impression 10 selon la passe P₁ ou P₂, cette direction étant représentée par une flèche élargie sur les figures 3 à 6.

On note e1 l'écart entre deux lignes de peinture Lᵢ et Lᵢ₊₁. Cet écart e1 est mesuré perpendiculairement à l'axe Xⱼ pour chaque passe.

On note D14 une droite orientée passant par les centres des buses 14ᵢ de la rangée de buses représentée aux figures 2 et suivantes. La droite D14 est orientée de la buse 14₁ vers la buse 14₈.

On note α un angle orienté, défini entre la droite D14 et l'axe Xⱼ de la passe Pⱼ en cours.

Dans l'exemple des figures 3 et suivantes, l'angle α est positif et inférieur à 90°, de préférence compris entre 45° et 80°, de préférence encore de l'ordre de 60°, dans la configuration de l'insert A) de chacune des figures 3 à 6. Dans la configuration de l'insert B) de chacune de ces figures, l'angle α est négatif. Avantageusement, pour une question de rapidité d'application, l'orientation de la tête d'impression 10 autour d'un axe perpendiculaire à la surface à revêtir et passant par le centre de la tête d'impression, n'est pas changée lors du passage de la passe P₁ à la passe P₂, alors que le sens de déplacement de la tête d'impression selon les axes X₁ et X₂ s'inverse. Ainsi, dans la configuration de l'insert B) de chacune de ces figures, la valeur absolue de l'angle α est, de préférence, égale sa valeur absolue dans la configuration de l'insert A) de chacune de ces figures.

L'angle α est l'angle d'inclinaison de la rangée de buses 14ᵢ par rapport à l'axe de passe Xⱼ pour chacune des passes Pⱼ.

On note g une goutte de produit de revêtement en train de transiter entre une buse 14ᵢ et la surface S. On note Gᵢ, avec i un entier naturel compris entre 1 et 8, une goutte de produit de revêtement issue de la buse 14ᵢ et en train d'être déposée sur la surface S.

Compte tenu de l'orientation de l'angle α dans la configuration des inserts A) des figures 3 à 6, chaque goutte Gᵢ est déposée avant la goutte Gᵢ₊₁, pour i compris entre 1 et 7.

Ainsi, lorsque la goutte Gᵢ₊₁ parvient sur la surface S, elle a tendance à migrer, par capillarité, vers une goutte Gᵢ déjà déposée au même niveau le long de l'axe X₁.

Globalement, les gouttes G₂ à G₈ ont tendance à migrer dans le sens de la flèche de migration M sur l'insert A) de la figure 3, c'est-à-dire du côté de la première ligne de gouttes L₁ déposée par la tête d'impression 10.

Ainsi, la bande B₁ de produit de revêtement déposé par la tête d'impression 10 le long de la première passe P₁ avant les autres passes Pⱼ a tendance à se décaler vers la gauche sur la partie droite de l'insert A) de la figure 3, c'est-à-dire vers la droite sur la figure 2. Ceci revient à dire que cette bande B₁ n'est pas forcément centrée sur l'axe X₁ et qu'elle peut laisser subsister une zone non revêtue entre elle-même et un bord longitudinal BL_{S} de la surface S, comme représenté à la figure 2, alors que ceci n'est pas souhaité.

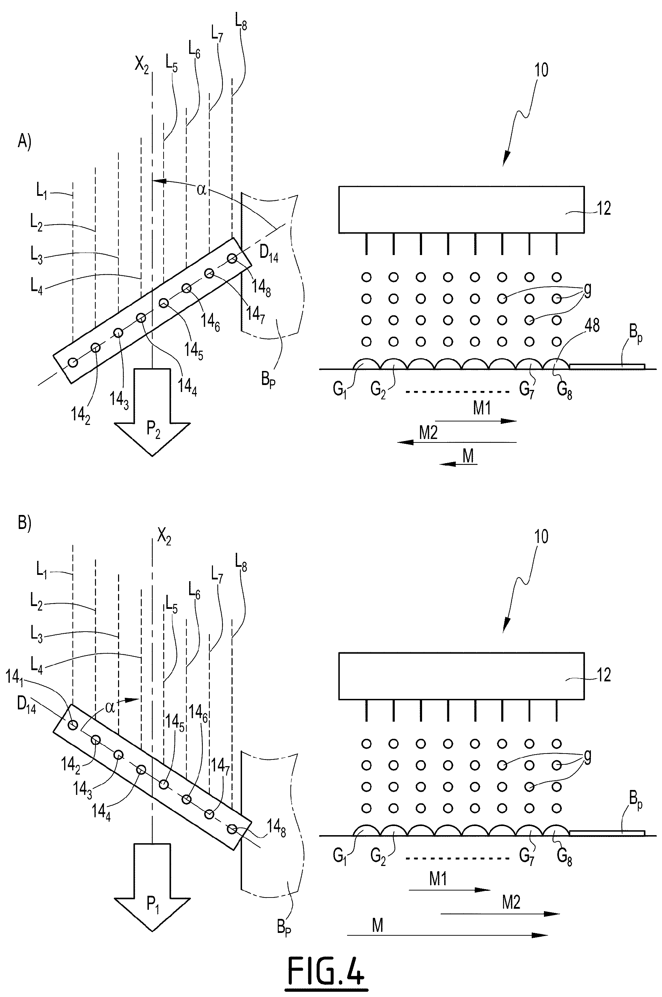

Dans le cas représenté sur l'insert B) de la figure 3, l'angle α a une valeur négative de sorte que les gouttes Gᵢ₊₁ sont déposées avant les gouttes Gᵢ, pour i compris entre 1 et 7. Dans ce cas, l'ensemble des gouttes G₁ à G₇ a tendance à migrer vers la droite dans la partie droite de l'insert B) de la figure 4, comme représenté par la flèche M.

L'insert A) de la figure 4 représente un cas où la tête d'impression est orientée comme sur l'insert A) de la figure 3, avec le même angle α, et où une bande B_{P} de produit de revêtement a été déposée lors d'une passe précédente et n'a pas encore fini de sécher.

Dans ce cas, chaque goutte G₁ à G₈ tend à migrer, par capillarité, en direction de la bande B_{P}, comme représenté par la flèche M1 sur la droite de l'insert A) de la figure 4.

D'autre part, selon le même phénomène que celui mentionné ci-dessus au sujet de l'insert A) de la figure 3, chaque goutte G₂ à G₈ tend à migrer vers la gauche de la partie droite de l'insert A) de la figure 4, comme représenté par la flèche M2.

Dans la mesure où les gouttes Gᵢ en cours de dépôt sont plus mouillées que la bande B_{P}, car elles ont été déposées depuis moins longtemps, l'effet de la migration par capillarité subie par les gouttes Gᵢ est plus intense dans le sens de la flèche M2 que dans le sens de la flèche M1, ce que représentent les longueurs différentes des flèches M1 et M2. Au final, les gouttes Gᵢ ont donc tendance à migrer vers la gauche dans la représentation de la partie droite de l'insert A), c'est-à-dire à l'opposé de la bande B_{P}, ce que représente la flèche M

Dans le cas de l'insert B) de la figure 4, où la tête d'impression est orientée comme sur l'insert B) de la figure 3, avec le même angle α, la situation est inversée et les effets de la migration dans le sens des flèches M1, vers la bande B_{P} déjà déposée, et de la migration M2, vers les gouttes Gᵢ₊₁, se cumulent, ce qui fait que la migration des gouttes Gᵢ est orientée vers la droite de l'insert B) de la figure 4, avec une amplitude supérieure au cas de l'insert A) de la figure 4, comme représenté par la flèche M.

Le cas de l'insert B) de la figure 4 correspond à celui représenté à la figure 2, dans la partie de la passe P₂ où la buse 10 se déplace au voisinage de la bande B₁ déjà déposée. Dans ce cas, la bande B_{P} et la bande B₁ sont la même entité physique.

Sur les figures 3 et 4, la longueur des flèches M, M1 et M2 est représentative de l'amplitude moyenne de la migration par capillarité observée sur les gouttes Gᵢ.

La figure 2 est très schématique puisqu'elle représente la buse 10 dans deux positions successives, à savoir une position sur la passe P₁, l'autre position sur la passe P₂. La deuxième position représentée au niveau de la passe P₂ présuppose que la passe P1 a été réalisée sur toute sa longueur et que la bande B₁ s'étend sur toute la longueur de la surface S, ce qui n'est pas représenté sur la figure 2, pour la clarté du dessin, en tenant compte de la représentation de la tête d'impression 10 dans une zone intermédiaire le long de la passe P₁.

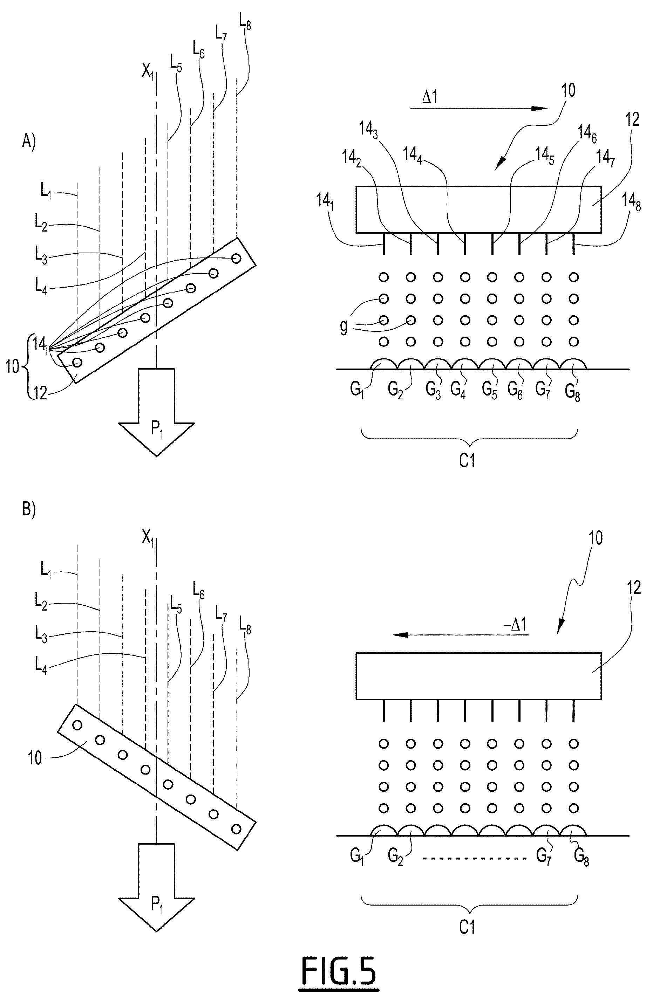

L'insert A) de la figure 5 montre une première mise en œuvre du procédé de l'invention selon lequel un décalage latéral Δ1 de la tête d'impression 10 est opéré, dans un sens opposé à la flèche de migration M sur l'insert A) de la figure 3 et avec une amplitude égale à l'amplitude de la migration M sur l'insert A) de la figure 3. Ceci a pour effet de recentrer l'ensemble de gouttes Gᵢ, par rapport à l'axe X₁.

L'insert B) de la figure 5 montre une deuxième mise en oeuvre du procédé de l'invention correspondant au cas de l'insert B) de la figure 3, dans lequel la migration M est corrigée en appliquant un décalage -Δ1, en sens inverse de celui de l'insert A) de la figure 5, de même amplitude.

Dans l'exemple de la figure 5, le décalage Δ1 ou - Δ1 permet de centrer l'ensemble de gouttes Gᵢ, à la fois sur l'axe X₁ et sur une zone cible C1 qui correspond à la zone théorique d'application de la peinture selon la trajectoire T, à partir de la tête d'impression 10, cette zone cible C1 étant déterminée sans prendre en compte la migration par capillarité au sein des gouttes G₁ à G₈.

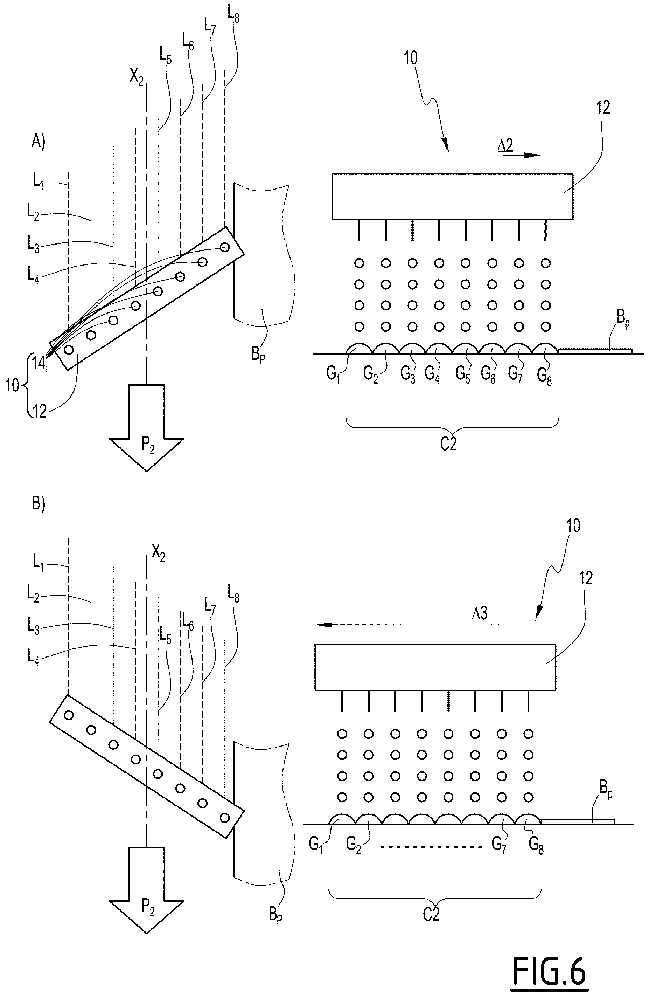

Dans le cas de l'insert A) de la figure 6, qui montre une troisième mise en œuvre du procédé de l'invention, un décalage Δ2 est appliqué en sens inverse de la migration M observée sur l'insert A) de la figure 4, pour compenser cette migration.

Ici, l'amplitude du décalage Δ2 est inférieure à l'amplitude du décalage Δ1, car la migration M dans le cas de l'insert A) de la figure 4 est de moindre amplitude que celle des inserts A) et B) de la figure 3.

Dans le cas de l'insert B) de la figure 6, qui montre une quatrième mise en œuvre du procédé de l'invention, un troisième décalage Δ3 est appliqué dans le sens inverse de la migration M observée sur l'insert B) de la figure 4 et avec une amplitude plus importante que dans la troisième mise en œuvre, permettant de compenser cette migration. Le troisième décalage Δ3 est orienté dans le même sens que le décalage -Δ1.

Le sens et l'amplitude des décalages Δ2 et Δ3 sont choisis pour que l'ensemble de gouttes Gᵢ appliqué par la tête d'impression 10, soit aligné sur l'axe de passe X₂ et sur une zone cible C2, comparable à la zone cible C1 mentionnée ci-dessus.

Dans l'exemple de la figure 6, le décalage Δ2 ou Δ3 permet de centrer l'ensemble de gouttes Gᵢ, à la fois sur l'axe X₂ et sur une zone cible C2 qui correspond à la zone théorique d'application de la peinture selon la trajectoire T, à partir de la tête d'impression 10, cette zone cible C2 étant déterminée sans prendre en compte la migration par capillarité en direction de la bande B_{P} de produit déjà déposée.

Ainsi, l'application des décalages Δ1, Δ2 ou Δ3 permet de réaligner les ensembles de gouttes Gᵢ sur les axes de passe Xⱼ et sur les zones cible C1, C2, ... correspondant à la trajectoire théorique T, en tenant compte de, et en compensant, la migration qui a lieu entre les gouttes Gᵢ en cours de dépôt sur chaque ligne Lᵢ et les gouttes adjacentes déjà déposées, dans une ligne Lᵢ en avance ou dans une bande B_{P} déjà présente sur la surface S.

En pratique, le calculateur 40 génère la trajectoire corrigée T', en ajoutant les décalages Δ1, Δ2 ou Δ3 aux passes la trajectoire théorique T, pour chacune des passes Pⱼ et une trajectoire corrigée complète T'est générée.

Les décalages Δ1, Δ2 ou Δ3 sont perpendiculaires aux axes Xⱼ des passes Pⱼ.

Avantageusement, comme dans l'exemple des figures, pour un produit de revêtement et un matériau de la surface S à revêtir donnés,
- une première valeur absolue du décalage Δ1 ou -Δ1 correspond au cas où la passe Pⱼ a lieu sans qu'une zone B_{P} de la surface S déjà revêtue soit adjacente à cette passe de la trajectoire, comme dans le cas de la figure 5 ;
- une deuxième valeur absolue du décalage Δ2 correspond au cas où la passe Pⱼ a lieu alors qu'une zone de la surface S déjà revêtue par la bande B_{P} est adjacente à cette passe, sur un premier côté de la passe voisin de la buse 14₈ de la rangée de buses, qui est la dernière buse selon le sens d'avance de la tête d'impression 10, comme dans le cas de l'insert A) de la figure 6 ; et
- une troisième valeur absolue du décalage Δ3 correspond au cas où la passe Pⱼ a lieu alors qu'une zone de la surface déjà revêtue par la bande B_{P} est adjacente à cette passe de la trajectoire, sur un deuxième côté de la passe, opposé au premier côté, comme dans le cas de l'insert B) de la figure 6 .

Le sens et l'amplitude de chacun des décalages Δ1, Δ2 ou Δ3 sont déterminés, dans chaque cas, en fonction de la direction et de l'intensité de la migration des gouttes Gᵢ en train d'être déposées.

En particulier, comme cela ressort de la comparaison des figures 5 et 6, l'amplitude et la direction du décalage dépendent notamment de la présence de la bande B_{P} sur la surface S et de sa position par rapport à la passe en cours, en particulier par rapport à la position et à l'orientation de la tête d'impression 10 le long de cette passe, définie par l'angle α.

L'amplitude de la migration des gouttes Gᵢ de peinture en train d'être déposées dépend également de la valeur de l'angle d'inclinaison α de la rangée de buses 14ᵢ par rapport à l'axe de passe Xⱼ, qui peut prendre une valeur positive, comme sur l'insert A) des figures 3 et 4, ou une valeur négative, comme sur l'insert B) de ces figures. L'orientation et la valeur de cet angle sont avantageusement prises en compte dans la détermination des décalages Δ1, Δ2 et Δ3.

Une autre caractéristique qui peut être prise en compte pour déterminer le sens et l'amplitude des décalages Δ1, Δ2 et Δ3 est l'angle de contact β entre le produit de revêtement et le matériau de la surface à revêtir S. L'angle de contact, ou angle de raccordement, d'un liquide sur un solide est l'angle de dièdre formé par la surface du solide et par la surface du liquide, le long d'une ligne de contact. De façon générale, l'angle de contact entre un liquide et un solide peut être considéré comme représentatif du mouillage entre ce liquide et ce solide. Plus l'angle de contact entre un solide et un liquide est petit, plus le liquide mouille le solide, ce qui reflète une certaine affinité entre ces deux éléments. La forme que prend une goutte de liquide sur une surface d'un solide dépend de la tension superficielle du liquide et de la nature de cette surface. Ainsi, l'angle de contact peut être considéré comme représentatif de la tension superficielle entre le produit de revêtement et le matériau de la surface à revêtir. L'angle de contact β est représenté sur l'insert A) de la figure 3. Plus cet angle de contact est faible, plus les gouttes Gᵢ ont tendance à migrer vers les lignes Lᵢ ou la bande B_{P} déjà déposées. Ainsi, il peut être tenu compte de cet angle de contact, ou de tout autre paramètre représentatif du mouillage ou de la tension de surface, pour déterminer le sens et/ou l'amplitude des décalages Δ1, Δ2 et Δ3.

Selon une première approche, le phénomène de migration rencontré dans chaque cas, c'est-à-dire le sens et l'amplitude de la flèche M dans les représentations des figures 3 et 4, peuvent être déterminés de façon expérimentale pour chaque couple de produit de revêtement et de matériau constitutif de la surface S à revêtir. Cette détermination expérimentale peut également tenir compte de l'angle d'inclinaison α, de l'angle de contact β, ainsi que d'autres paramètres tels que la température ambiante, l'humidité ambiante, la vitesse de déplacement de la tête d'impression 10 le long de l'axe Xⱼ de la passe Pⱼ en cours d'application, l'angle du jet de peinture par rapport à la cible (c'est-à-dire non pas l'angle de la ligne de buses par rapport au déplacement, mais la perpendicularité ou non perpendicularité de l'axe d'éjection des gouttes par rapport à la surface à peindre), le volume des gouttes déposées et/ou la quantité de gouttes déposées durant le déplacement linéaire des buses.

Il est ainsi possible de créer un ou plusieurs abaques comprenant des valeurs prédéterminées de sens et d'amplitude de migration, en fonction d'au moins un produit de revêtement et d'au moins un matériau constitutif de la surface à revêtir S. En particulier, plusieurs abaques peuvent être créés, chacune pour un couple formé d'un produit de revêtement et d'un matériau constitutif de la surface à revêtir S. Ce ou ces abaques sont stockés dans la mémoire du calculateur 40. Dans ce cas, lorsqu'il convient d'utiliser la tête d'impression 10 pour appliquer un produit de revêtement au moyen des buses 14ᵢ, le calculateur 40 accède à l'abaque correspondant au couple considéré, pour connaître le sens et l'amplitude de la migration M des goutes Gᵢ dans l'hypothèse où la trajectoire T n'est pas corrigée, comme sur les figures 3 et 4. Ensuite, le calculateur 40 applique un décalage Δ1 , Δ2 ou Δ3 à chaque passe de la trajectoire, en sens opposé de la migration M et de même amplitude, pour ramener l'ensemble de gouttes Gᵢ sur l'axe de passe Xⱼ et en alignement avec la cible correspondante. L'utilisation des décalages Δ1, Δ2 et/ou Δ3 permet de générer, à partir de la trajectoire théorique T, la trajectoire corrigée T', qui est ensuite transmise au contrôleur 24 par la calculateur 40.

Selon une deuxième approche, il est possible de calculer, au moyen du calculateur 40, le sens et l'amplitude du décalage Δ1, Δ2 ou Δ3 à appliquer, en tenant compte notamment de la géométrie de la tête d'impression, de l'angle d'inclinaison α, de la présence ou non d'une bande B_{P} déjà déposée et/ou de l'angle de contact β entre le produit de revêtement et le matériau de la surface à revêtir S. D'autres paramètres peuvent également être pris en compte lors d'un tel calcul, tels que la température ambiante, l'humidité ambiante, la vitesse de déplacement de la tête d'impression 10 le long de l'axe Xⱼ de la passe Pⱼ en cours d'application, l'angle du jet de peinture par rapport à la cible, le volume des gouttes déposées et/ou la quantité de gouttes déposées durant le déplacement linéaire des buses.

Une fois les décalages Δ1, Δ2 et/ou Δ3 déterminés, la trajectoire corrigée T' est générée par le calculateur 40, également à partir de la trajectoire théorique T, et transmise au contrôleur 24.

Selon une troisième approche, il est possible de combiner les première et deuxième approches.

Quelle que soit l'approche utilisée, le résultat du calcul effectué par le calculateur 40 est la combinaison du sens et de l'amplitude du décalage Δ1, Δ2 et/ou Δ3 à appliquer pour ramener l'ensemble de gouttes Gᵢ sur la zone cible considérée pour chaque passe Pⱼ, à savoir la zone C1 ou la sone C2 dans l'exemple décrit ci-dessus, et la trajectoire corrigée T'.

De façon générale, l'amplitude du décalage est comprise entre 25 et 50% du diamètre d'une goutte Gᵢ en cours de dépôt sur la surface à revêtir S.

Par exemple, les gouttes Gᵢ peuvent avoir un diamètre de 800 µm (micromètre) et le décalage appliqué dans les cas des figures 5 et 6 est avantageusement compris entre 200 et 400 µm.

Avantageusement, plusieurs passes Pⱼ sont mises en oeuvre les unes après les autres, comme dans l'exemple de la figure 2. Dans ce cas, le décalage appliqué pour une passe tient, de préférence, compte des décalages appliqués pour les passes précédentes.

En variante seule une passe, ou certaines des passes Pⱼ, de la trajectoire T sont décalées selon une direction perpendiculaire à leur axe de passe Xⱼ.

On remarque à la figure 2 que le décalage Δ1 appliqué pour la première passe P₁ est en sens opposé du décalage Δ3 appliqué pour la deuxième passe P₂, ce qui correspond au fait que les flèches de décalage Δ1 et Δ3 sont en sens opposés sur les inserts A) de la figure 5 et B) de la figure 6.

A la figure 2, les passes de la trajectoire sont représentées avec des axes rectilignes. Ceci n'est toutefois pas obligatoire et des passes avec des axes longitudinaux courbes peuvent être utilisées, le procédé de l'invention étant alors adapté en conséquence.

L'invention est représentée sur les figures 2 et suivantes dans le cas où la tête d'impression 10 comprend une seule rangée de buses 14ᵢ. Elle est applicable également dans le cas où cette tête d'impression comprend plusieurs rangées de buses, comme représenté à la figure 1.

L'invention est représentée sur les figures avec trois décalage Δ1, Δ2 et Δ3, qui peuvent être orienté dans un premier sens ou dans un deuxième sens opposé au premier sens. Selon les cas, des décalages -Δ2 et/ou -Δ3 en sens opposés aux décalages Δ2 et/ou Δ3 peuvent être utilisés. Le nombre de décalages n'est pas limitatif. En variante ou en complément, d'autres décalages, avec des amplitudes différentes, peuvent être utilisés.

Le produit de revêtement appliqué peut être une peinture, comme mentionné ci-dessus ou, en variante, un autre produit de revêtement, tel qu'un apprêt ou un vernis.

Quel que soit le mode de réalisation ou la variante, grâce aux décalages Δ1, Δ2 et/ou Δ3, l'invention permet de compenser un phénomène de migration par capillarité du produit de revêtement
- entre une goutte Gᵢ de produit de revêtement en train d'être déposée et une goutte Gᵢ₊₁ ou Gᵢ₊₁ de produit de revêtement déjà déposée dans la même passe, selon l'orientation de l'angle α et/ou
- entre une goutte Gᵢ de produit de revêtement en train d'être déposée et une bande B_{P} de produit de revêtement déjà déposée.

Toute caractéristique décrite ci-dessus pour un mode de réalisation ou une variante est applicable aux autres modes de réalisation et variantes, pour autant que cela est techniquement possible.

## Revendications

1. Procédé d'application de produit de revêtement liquide sur une surface (S) à revêtir, dans lequel une tête d'impression (10) équipée d'au moins une rangée de buses d'impression (14ᵢ) est déplacée en regard de la surface à revêtir selon une trajectoire (T) comprenant au moins une passe (Pⱼ) qui s'étend suivant un axe de passe (Xⱼ), **caractérisé en ce qu'**il comprend au moins une étape consistant à compenser un phénomène de migration par capillarité du produit de revêtement, entre une goutte (Gᵢ) de produit de revêtement en train d'être déposée et une goutte ou une bande (B_{P}) de produit de revêtement déjà déposée, par décalage (Δ1, Δ2, Δ3) d'au moins une passe en cours de la trajectoire, perpendiculairement à son axe de passe (Xⱼ).

2. Procédé selon la revendication précédente, dans lequel un calculateur (40) détermine, à partir d'une trajectoire théorique (T) de la tête d'impression (10), une trajectoire corrigée (T') dans laquelle au moins une passe (Pj) est décalée par rapport à sa position selon la trajectoire théorique, d'un décalage (Δ1, Δ2, Δ3) perpendiculaire à son axe de passe (Xⱼ)

3. Procédé selon l'une des revendications précédentes, dans lequel le sens et/ou l'amplitude du décalage (Δ1, Δ2, Δ3) de la passe en cours (Pj) de la trajectoire (T) est ou sont déterminé(s) en tenant compte de la présence d'une éventuelle zone (B_{P}) de la surface (S) déjà revêtue, adjacente à la passe en cours (Pj), et de la position de cette zone de la surface déjà revêtue par rapport à la passe en cours.

4. Procédé selon l'une des revendications précédentes, dans lequel le sens et/ou l'amplitude du décalage (Δ1, Δ2, Δ3) de la passe en cours (Pj) de la trajectoire (T) est ou sont déterminé(s) en tenant compte d'un éventuel angle d'inclinaison (α) de la rangée de buses (14ᵢ) par rapport à l'axe de la passe (Xⱼ).

5. Procédé selon l'une des revendications précédentes, dans lequel le sens et/ou l'amplitude du décalage (Δ1, Δ2, Δ3) de la passe en cours (Pj) de la trajectoire (T) est ou sont déterminé(s) en tenant compte d'un angle de contact (β) entre le produit de revêtement et le matériau de la surface à revêtir (S).

6. Procédé selon l'une des revendications précédentes, dans lequel, pour un produit de revêtement et un matériau de la surface à revêtir donnés, l'amplitude du décalage de la passe en cours de la trajectoire est sélectionnée parmi
- une première valeur absolue du décalage (Δ1,-Δ1) correspondant au cas où la passe (Pⱼ) a lieu sans qu'une zone (B_{P}) de la surface (S) déjà revêtue soit adjacente à la passe de la trajectoire ;
- une deuxième valeur absolue du décalage (Δ2) correspondant au cas où la passe a lieu alors qu'une zone de la surface (S) déjà revêtue par une bande de produit de revêtement (B_{P}) est adjacente à la passe de la trajectoire, sur un premier côté de la passe voisin d'une buse (14₈) de la rangée de buses ; et
- une troisième valeur absolue du décalage (Δ3) correspondant au cas où la passe a lieu alors qu'une zone de la surface (S) déjà revêtue par une bande de produit de revêtement (B_{P}) est adjacente à la passe de la trajectoire, sur un deuxième côté de la passe, opposé au premier côté.

7. Procédé selon l'une des revendications précédentes, dans lequel le sens et/ou l'amplitude du décalage (Δ1, Δ2, Δ3) de la passe (Pⱼ) en cours de la trajectoire (T) est ou sont déterminé(s) à partir d'au moins un abaque contenant des valeurs prédéterminées de sens et d'amplitude de migration, en fonction d'au moins le produit de revêtement et le matériau constitutif de la surface à revêtir.

8. Procédé selon l'une des revendications précédentes, dans lequel l'amplitude du décalage (Δ1, Δ2, Δ3) de la passe (Pⱼ) en cours de la trajectoire (T) est comprise entre 25% et 50% du diamètre d'une goutte (Gᵢ) de produit de revêtement en cours de dépôt par une des buses (14ᵢ) de la rangée de buses.

9. Procédé selon l'une des revendications précédentes, dans lequel la trajectoire (T) comprend plusieurs passes successives (Pⱼ), notamment des passes adjacentes, et dans lequel le sens et/ou l'amplitude du décalage (Δ1, Δ2, Δ3) de chaque passe en cours de la trajectoire est ou sont déterminé(s) en tenant compte du sens et/ou de l'amplitude du décalage de la passe précédente.

10. Installation (I) d'application de produit de revêtement liquide sur une surface à revêtir (S) d'un objet (O), l'installation incluant une tête d'impression (10) équipée d'au moins une rangée de buses d'impression, cette installation étant **caractérisée en ce qu'**elle comprend un calculateur (40) configuré pour mettre en œuvre un procédé selon l'une des revendications précédentes.
